## Europäisches Patentamt
## European Patent Office
## Office européen des brevets

(11) Veröffentlichungsnummer: **0 131 889**
**B1**

(12) **EUROPÄISCHE PATENTSCHRIFT**

(45) Veröffentlichungstag der Patentschrift: **09.05.90**

(21) Anmeldenummer: **84108058.3**

(22) Anmeldetag: **10.07.84**

(51) Int. Cl.⁵: **B 60 J 7/04**

(54) **Fahrerhaus eines Nutzfahrzeuges.**

(30) Priorität: **15.07.83 DE 3325640**

(43) Veröffentlichungstag der Anmeldung:
**23.01.85 Patentblatt 85/04**

(45) Bekanntmachung des Hinweises auf die
Patenterteilung:
**09.05.90 Patentblatt 90/19**

(84) Benannte Vertragsstaaten:
**AT DE FR GB IT NL SE**

(56) Entgegenhaltungen:
**DE-A-2 543 734**
**DE-A-3 043 586**
**DE-C- 958 620**

(73) Patentinhaber: **MAN Nutzfahrzeuge**
**Aktiengesellschaft**
**Dachauer Strasse 667 Postfach 50 06 20**
**D-8000 München 50 (DE)**

(72) Erfinder: **Watzek, Gerhard**
**Eduard-Spranger-Strasse 34**
**D-8000 München 45 (DE)**
Erfinder: **Schmidt, Werner**
**Vogelloh 54**
**d-8000 München 50 (DE)**

Courier Press, Leamington Spa, England.

EP 0 131 889 B1

**Beschreibung**

Die Erfindung betrifft den Einbau eines Schiebedaches in das Dach eines Kraftfahrzeuges, insbesondere am Fahrerhaus eines Nutzfahrzeuges, wie Lastkraftwagen, mit Merkmalen der im Oberbegriff des Anspruches 1 angegebenen Art.

Aus der DE-A-30 43 586 ist eine spezielle Methode für den nachträglichen Einbau eines Schiebedaches in ein Kraftfahrzeug-Dach bekannt. Dabei wird in das durchgehende Dach zunächst ein Dachausschnitt so eingeschnitten, daß die übrige Lackierung nicht beschädigt wird. Anschließend wird eine Schiebedach-Kassette am Dach unterhalb des Dachausschnittes angesetzt. Dann wird der Rahmen der Schiebedach-Kassette ringsum des Dachausschnittes am Dach durch Punktschweißen unlösbar fest verbunden. Außerdem wird der Rahmen über seitliche Stützen mit Dachlängsholmen unlösbar verschweißt. Dann wird ein als Halte- und Verblendorgan dienender Winkelrahmen, der diesen Dachausschnitt dachaußenseitig übergreift, angesetzt und fest mit der Schiebedach-Kassette verbunden, z.B. durch Schweißen.

Bei der Erfindung geht es jedoch nicht um einen solchen nachträglichen Einbau eines Schiebedaches. Die diesbezügliche Problematik ist nachstehend dargelegt.

Zur Belüftung der Fahrerhäuser von Nutzfahrzeugen, wie Lastkraftwagen, waren bisher im Dach eingebaute Dachklappen vorgesehen, die hoch- bzw. schräggestellt eine Art Ringöffnung freigeben. Ein Nutzfahrzeug-Fahrerhaus stellt einen Arbeitsplatz dar, in dem der Fahrer bei häufigen Standzeiten und langen, oft auch langsamen Fahrten nicht selten einer starken Sonneneinstrahlung ausgesetzt ist. Für solche Fälle sind die bisherigen Belüftungseinrichtungen, die ihre beste Wirkung nur bei schnelleren Fahrten entwickeln, unzureichend.

Es ist daher Aufgabe der Erfindung, eine mit fertigungstechnisch einfachen Mitteln realisierbare Lösung anzugeben, die eine verbesserte Belüftungsmöglichkeit des Fahrerarbeitsplatzes schafft.

Diese Aufgabe ist erfindungsgemäß durch die im Anspruch 1 gekennzeichneten Merkmale gelöst.

Durch die Anpassung der Anordnung und Größe des Durchbruches im Dach für die Schiebedachluke an den üblichen Durchbruch für konventionelle Dachklappen läßt sich der Einbau von Schiebedächern in serienmäßig hergestellten Fahrerhäusern ohne zusätzliche fertigungstechnische Maßnahmen in bereits bestehenden Fertigungsstraßen eingliedern. Preßtechnisch ändert sich dabei in der Herstellung der Dach- bzw. Außenhaut des Fahrerhauses nichts.

Die Versteifung des Fahrerhausdaches erfolgt üblicherweise durch Längs- und Querspriegel, wobei ein mittlerer Querspriegel üblicherweise bei Fahrerhäusern mit Dachklappe im Mittelbereich unterbrochen wird. Der unterbrochene Bereich wird durch eine Querversteifung des Grundrahmens des Schiebedaches ausgefüllt.

Im übrigen ist der Grundrahmen über Verbindungselemente an den Längs- bzw. Querspriegeln befestigt.

Die Verbindungselemente können durch Profilbleche gebildet sein, deren eines Ende jeweils am Grundrahmen und deren anderes Ende jeweils an einem Spriegel befestigt, z.B. angeschraubt oder punktverschweißt ist.

In einer fertigungstechnisch sehr einfachen Form sind die Verbindungselemente U-förmig profiliert, wobei die Schenkel jeweils an den Seiten des Grundrahmens bzw. eines Spriegels befestigt sind. Ist der Abstand zwischen dem Grundrahmen und dem Spriegel relativ groß, so wird der Mittelbereich des U-förmigen Verbindungselementes zusätzlich profiliert.

Es ist auch möglich, einfache Z-förmige Verbindungselemente zu verwenden, die gegebenenfalls — soweit notwendig — durch zusätzliche Profilierungen versteift sind.

Gemäß einer weiteren Ausgestaltung der Erfindung ist der Grundrahmen des Schiebedaches unterhalb der Dachhaut des Fahrerhauses angeordnet und die Ränder des Durchbruches sind nach innen um einen Teil des Grundrahmens umgebördelt.

Bei langen Fahrerhäusern, beispielsweise solchen mit Schlafkojen, ist es vorteilhaft, wenn das Schiebedach in Längsrichtung verschiebbar ist, um für beide Sitzplätze gleiche Lüftungsverhältnisse zu schaffen.

Für kurze Fahrerhäuser wird ein in Querrichtung verschiebbares Schiebedach vorgeschlagen, wobei die Luke auf der Fahrerseite angeordnet ist.

Nachstehend ist die erfindungsgemäße Lösung anhand der Zeichnung noch näher erläutert.

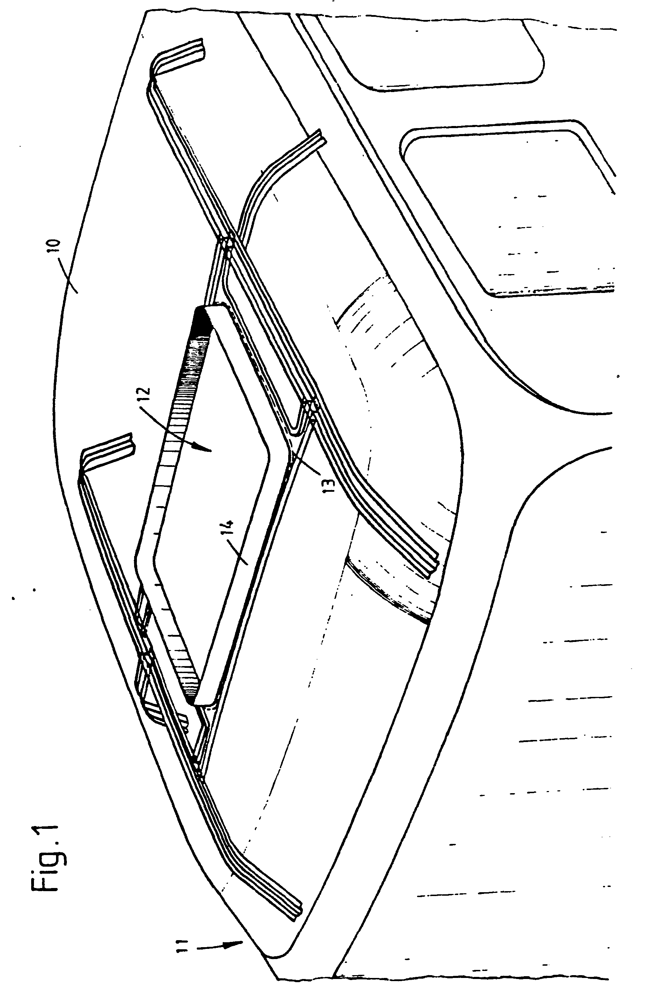

In Fig. 1 ist das Dach 10 eines Lastwagen-Fahrerhauses 11 gezeigt, das mit einem Durchbruch 12 für eine herkömmliche, nicht dargestellte Dachklappe versehen ist. Für die Anbringung eines Schiebedaches wird das Dachblech im Bereich des Durchbruches 12 entlang der gestrichelten Linie 13 durchbrochen, so daß der im Preßverfahren eingeprägte Rand 14 für die Dachklappe herausgetrennt wird.

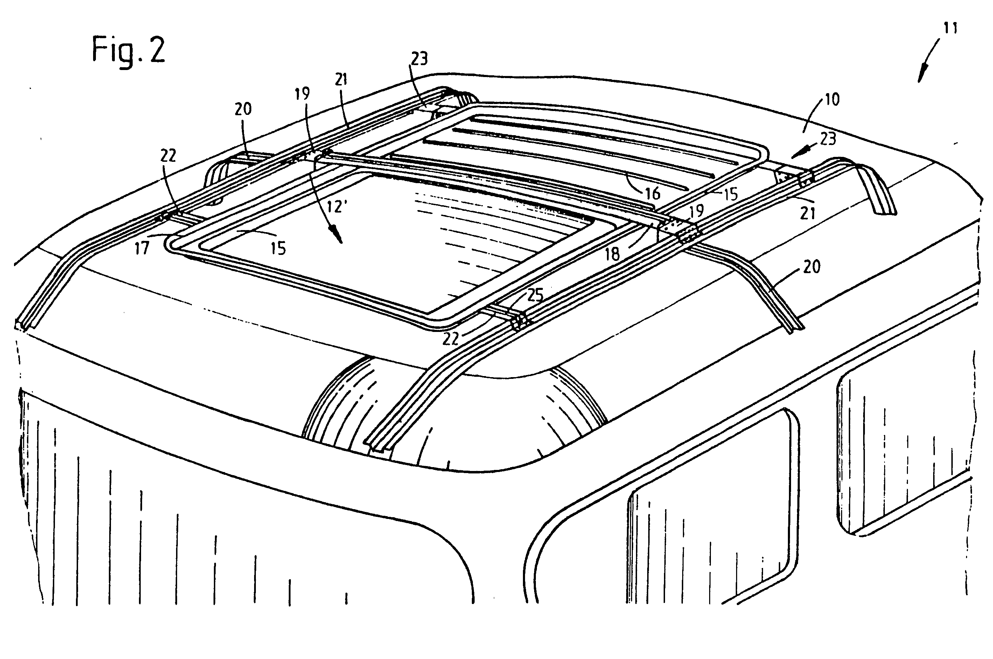

In Fig. 2 ist eine Ausführung mit einem Schiebedach dargestellt, bei der die Dachhaut 10 des Fahrerhauses 11 einen erweiterten Durchbruch 12' hat. Unterhalb der Dachhaut 10 ist ein Grundrahmen 15 angeordnet, in dem ein Schiebedach 16 längs verschiebbar gelagert ist. Im Bereich des Durchbruches 12' ist die Dachhaut 10 um den Grundrahmen 15 umgebördelt. Der Grundrahmen 15 ist mit einer Querversteifung 18 ausgerüstet, deren Enden durch Verbindungselemente 19 im Bereich der beiden Teile des unterbrochenen Querspriegels 20 jeweils an einem Längsspriegel 21 befestigt sind. Die Querversteifung 18 des Grundrahmens 15 füllt somit die zum Einsetzen des Schiebedaches erforderliche Unterbrechung des Querspriegels 20 aus, so daß die für das Fahrerhaus notwendige Querversteifung aufrechterhalten bleibt. Im vorderen Bereich ist der Grundrahmen 15 zusätzlich mit einstückigen Verbindungselementen 22 und im hinteren Bereich mit zweistückigen Verbindungselementen 23 verankert. Durch zweistückige, insbesondere U-förmige Verbindungselemente 23 läßt sich die notwendige Versteifung auch mit relativ dünnen Blechteilen erreichen. Bei geringem Abstand zwischen Grundrahmen 15 und Längssprigeln 21 reichen einstückige Verbindungselemente 22. Diese können erforderlichenfalls zusätzlich mit einer Profilierung 25 versehen sein.

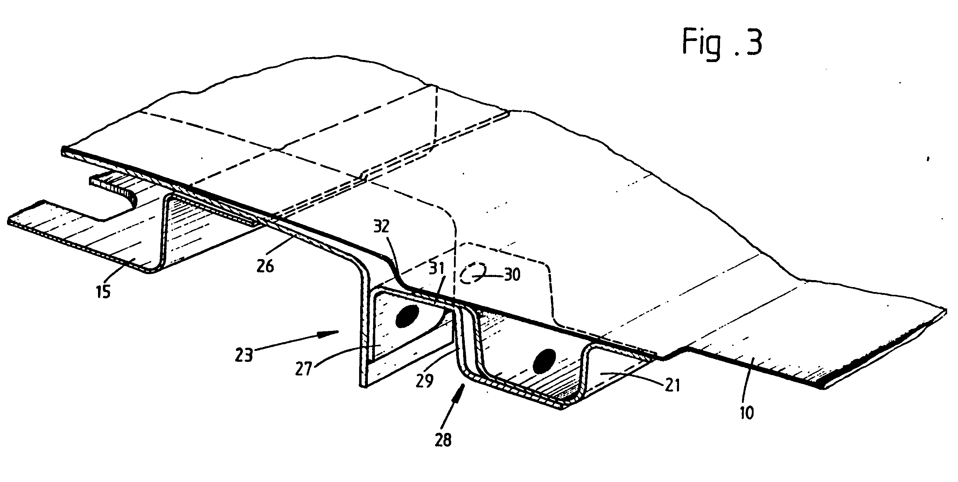

In Fig. 3 ist ein Verbindungselement 23 näher dargestellt. Dieses ist zweistückig und besteht aus einem L-förmigen ersten Teil 26, dessen eines Ende mit dem Grundrahmen 15 punktgeschweißt ist und dessen anderes Ende mit einem ersten Schenkel 27 eines U-förmigen zweiten Teiles 28 punktverschweißt ist. Der zweite Schenkel 29 des Teiles 28 ist nach außen hin umgebogen, um unterhalb des Längssprigels 21 befestigt werden zu können. Eine zusätzliche Schweißstelle 30 ist am Mittelteil 31 des U-förmigen zweiten Teiles 28 gegeben.

Die Ausbildung dieses Verbindungselementes in zwei miteinander verbundenen Teilen 26, 28 hat den Vorteil, daß einerseits eine Versteifung des gesamten Verbindungselementes 23 erreicht wird und andererseits das Verbindungselement 23 leicht an Wölbungen 32 in der Dachhaut 10 angepaßt werden kann.

In der dargestellten Ausführung ist das Schiebedach 16 in Längsrichtung des Fahrerhauses 11 verschiebbar angeordnet. Es ist aber auch möglich, das Schiebedach 16 quer zur Fahrtrichtung anzuordnen, wobei der Grundrahmen 15 mit zwei Querversteifungen 18 ausgerüstet wird, die jeweils zwischen den Enden von Fahrerhaus-Längssprigeln angebracht werden.

## Patentansprüche

1. Einbau eines Schiebedaches in das Dach eines Kraftfahrzeuges, insbesondere am Fahrerhaus eines Nutzfahrzeuges, wie Lastkraftwagen, wobei das Schiebedach (16) in einem Grundrahmen (15) verschiebbar gelagert ist, der in einem in der Dachhaut (10) gegebenen Durchbruch (12') angeordnet und über Verbindungselemente (22, 23) an die Dachhaut (10) versteifenden Längssprigeln (21) befestigt ist, dadurch gekennzeichnet, daß der Durchbruch (12') in der Dachhaut (10), um anstelle des Schiebedaches (16) den alternativen Einbau einer Dachklappe zu ermöglichen, hinsichtlich seiner Größe an die Größe eines Durchbruches (12) für eine solche Dachklappe angepaßt ist und einen in der Dachhaut (10) gegebenen Querspriegel (20) unterbricht, und daß der Grundrahmen (15) eine Querversteifung (18) hat, die auch zur Vervollständigung des unterbrochenen Quersprigels (20) dient und seitlich zu den Spriegeln (20 bzw. 21) hin verlängert, an diesen angeschlossen ist.

2. Einbau eines Schiebedaches nach Anspruch 1, dadurch gekennzeichnet, daß die den Grundrahmen (15) überspannende Querversteifung (18) über sich als beidseitige Verlängerungen anschließende Verbindungselemente (19) an je einen der Spriegel (20 bzw. 21) angeschlossen ist.

3. Einbau eines Schiebedaches nach den vorhergehenden Ansprüchen, dadurch gekennzeichnet, daß die Verbindungselemente (22, 19, 23) durch Profilbleche gebildet sind, deren eines Ende jeweils am Grundrahmen (15) des Schiebedaches (16) und deren anderes Ende jeweils an einem Spriegel (21 bzw. 20) befestigt ist.

4. Einbau eines Schiebedaches nach Anspruch 3, dadurch gekennzeichnet, daß die Verbindungselemente (19) im wesentlichen U-förmig profiliert sind.

5. Einbau eines Schiebedaches nach Anspruch 3, dadurch gekennzeichnet, daß die Verbindungselemente (22, 23) Z-förmig profiliert und — soweit notwendig — durch zusätzliche Profilierungen (25) weiter versteift sind.

6. Einbau eines Schiebedaches nach einem der vorhergehenden Ansprüche, dadurch gekennzeichnet, daß der Grundrahmen (15) des Schiebedaches (16) unterhalb der Dachhaut (10) des Daches angeordnet ist und die Ränder (17) des Durchbruches (12') nach innen um mindestens ein Teil des Grundrahmens (15) umgebördelt sind.

7. Einbau eines Schiebedaches nach einem der vorhergehenden Ansprüche, dadurch gekennzeichnet, daß der Grundrahmen (15) je nach im Dach gegebenen Platzverhältnisse entweder längs oder quer zur Fahrtrichtung in die Dachhaut (10) eingebaut ist.

## Revendications

1. Montage d'un toit ouvrant dans le toit d'un véhicule utilitaire, en particulier sur la cabine de conducteur d'un véhicule utilitaire, tel qu'un camion, le toit coulissant (16) étant monté déplaçable dans un cadre de base (15) disposé dans un passage (12') pratiqué dans la tôle de toit (10) et fixé aux arceaux longitudinaux (21) renforçant la tôle de toit (10) par l'intermédiaire d'éléments de liaison (22, 23), caractérisé en ce que, pour permettre de monter en alternative un volet de toit au lieu du toit ouvrant (16), le passage (12') pratiqué dans la tôle de toit (10) est d'une taille adaptée à la taille d'un passage (12) destiné à un tel volet de toit et interrompt un arceau transversal (20) placé dans la tôle de toit (10), et en ce que le cadre de base (15) présente un renfort transversal (18) servant également à compléter l'arceau transversal (20) interrompu et est prolongé latéralement par rapport aux arceaux (20, 21) et raccordé à ceux-ci.

2. Montage d'un toit ouvrant selon la revendication 1, caractérisé en ce que le renfort transversal (18) pontant le cadre de base (15) est raccordé à chacun des arceaux (20 ou 21) par l'intermédiaire d'éléments de liaison (19) ayant la forme de prolongements se raccordant sur les deux côtés.

3. Montage d'un toit ouvrant selon l'une des revendications précédentes, caractérisé en ce que les éléments de liaisons (22, 19, 23) sont constitués par des tôles profilées dont une extrémité est chaque fois fixée au cadre de base (15) du toit ouvrant (16) et dont l'autre extrémité est chaque fois fixée à un arceau (21, 20).

4. Montage d'un toit ouvrant selon la revendications 3, caractérisé en ce que les éléments de liaison (19) ont des profils sensiblement en forme de U.

5. Montage d'un toit ouvrant selon la revendications 3, caractérisé en ce que les éléments de liaison (22, 23) ont des profils en forme de Z et sont, si nécessaire, l'objet d'un renforcement supplémentaire obtenu au moyen de profilés (25).

6. Montage d'un toit ouvrant selon l'une des revendications précédentes, caractérisé en ce que le cadre de base (15) du toit ouvrant (16) est disposé au-dessous de la tôle de toit (10) du toit et les bords (17) du passage (12') étant bridés vers l'intérieur sur au moins une partie du cadre de base (15).

7. Montage d'un toit ouvrant selon l'une des revendications précédentes, caractérisé en ce que, selon l'espace disponible dans le toit, le cadre de base (15) est monté soit en direction longitudinale, soit en direction transversale par rapport au sens du déplacement.

**Claims**

1. Installation of a sliding roof in the roof of a motor vehicle, in particular in the driver's cab of a commercial vehicle, such as a lorry, the sliding roof (16) being displaceably mounted in a base frame (15) arranged in an opening (12') provided in the roof covering (10) and being secured via connecting elements (22, 23) to longitudinal stays (21) reinforcing the roof covering (10), characterized in that, in order to allow in place of the sliding roof (16) the alternative installation of a hinged sunroof, the size of the opening (12') is designed to match the size of an opening (12) for such a hinged sunroof and the opening (12') interrupts a transverse stay (20) provided in the roof covering (10), and in that the base frame (15) has a transverse reinforcement (18) also acting as a continuation of the interrupted transverse stay (20) and extending laterally towards the stays (20 and 21, respectively) and being connected thereto.

2. Installation of a sliding roof according to Claim 1, characterized in that the transverse reinforcement (18) spanning the base frame (15) is connected to each of the stays (20, 21) via interconnecting extension elements (19).

3. Installation of a sliding roof according to the preceding claims, characterized in that the connecting elements (22, 19, 23) are formed by sheet metal profiles, one end of each of which being secured to the base frame (15) of the sliding roof (16) and the other end of each of which being secured to a stay (21 or 20).

4. Installation of a sliding roof according to Claim 3, characterized in that the connecting elements (19) are profiled so as to be substantially U-shaped.

5. Installation of a sliding roof according to Claim 3, characterized in that the connecting elements (22, 23) are profiled so as to be Z-shaped and, where necessary, are further reinforced by additional profiling (25).

6. Installation of a sliding roof according to one of the preceding claims, characterized in that the base frame (15) of the sliding roof (16) is arranged underneath the roof covering (10) of the roof and the edges (17) of the opening (12') are flanged inwards around at least a part of the base frame (15).

7. Installation of a sliding roof according to one of the preceding claims, characterized in that the base frame (15) is installed in the roof covering (10) either longitudinally or transversely relative to the direction of travel, depending on the spatial conditions existing in the roof.

Fig.1

1

Fig. 2

EP 0 131 889 B1

EP 0 131 889 B1

Fig .3